(19) Europäisches Patentamt
European Patent Office
Office européen des brevets

(11) **EP 4 353 489 A1**

(12) **EUROPEAN PATENT APPLICATION**

(43) Date of publication:
**17.04.2024 Bulletin 2024/16**

(21) Application number: **22306540.0**

(22) Date of filing: **12.10.2022**

(51) International Patent Classification (IPC):
***B43K 19/02*** *(2006.01)*    *C09D 13/00* *(2006.01)*

(52) Cooperative Patent Classification (CPC):
**B43K 19/02; B43K 19/18; C09D 13/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Société BIC
92110 Clichy (FR)**

(72) Inventors:
• **Napoly, Justine
92110 Clichy (FR)**
• **Gouerec, Julien
92110 Clichy (FR)**
• **Hanquez, Valérie
92110 Clichy (FR)**

(74) Representative: **Peterreins Schley
Patent- und Rechtsanwälte PartG mbB
Hermann-Sack-Straße 3
80331 München (DE)**

(54) **COLORING COMPOSITION**

(57)    In a first aspect, the present disclosure relates to a writing instrument comprising a lead, wherein the lead comprises at least about 0.01 wt.-% Zr02 and at least about 0.01 wt.-% ZnO, relative to the total weight of the lead.

EP 4 353 489 A1

## Description

### Technical Field

The present invention relates to the field of writing instruments. More specifically the present invention relates to writing instruments comprising $ZrO_2$ and ZnO.

### Background

The present invention relates to writing instruments, in particular dry coloring writing instruments, such as wax crayons or colored pencils.

Writing instruments such as pencils and wax crayons comprise or consist of a solid pigment core, also referred to as a lead. The writing instruments comprising a lead are used to create markings by rubbing the lead against a substrate, such as a piece of paper, to form a deposit on the substrate.

The leads comprise a structural component mixed with one or more colorants, such as pigments or dyes. For example, a wax crayon may comprise wax as a structural component, wherein the wax is mixed with a blue pigment to produce a blue wax crayon.

However, the resulting shade of the lead and the markings produced by the lead may be considered too dark. For example, mixing a wax with a blue pigment may result in a dark blue color of the lead and its marking. To obtain a lead of a lighter shade, the wax may be mixed with a white colorant. Typically, the white pigment $TiO_2$ is used to lighten the shade of leads, due to its strong whitening effect. For example, a wax may be mixed with a blue pigment and additionally $TiO_2$ to obtain a light blue wax crayon, which may provide a light blue deposit, in particular when deposited on a white paper.

However, recently concerns have emerged that $TiO_2$ dust may possibly be carcinogenic to humans. During the production of leads comprising $TiO_2$, in particular during the mixing of the structural component with the $TiO_2$, $TiO_2$ may be generated, which may be harmful to manufacturing personnel.

The present disclosure aims to address the aforementioned issues in optimizing the writing instrument's lead composition.

### Summary

In a first aspect, the present disclosure relates to a writing instrument comprising a lead, wherein the lead comprises at least about 0.01 wt.-% $ZrO_2$, and at least about 0.01 wt.-% ZnO, relative to the total weight of the lead.

In some embodiments, the ratio of $ZrO_2$ to ZnO may be between about 3:1 to about 1:3, more specifically between about 2:1 to about 1:2 and in particular between about 1.2:1 to about 1:1.8.

In some embodiments, the lead may comprise less than about 0.5 wt.-%, more specifically less than about 0.2 wt.-% and in particular substantially no or no TiO2.

In some embodiments, the lead may comprise less than about 0.5 wt.-%, more specifically less than about 0.2 wt.-% and in particular substantially no or no black pigment, in particular carbon black.

In some embodiments, the lead may comprise between about 1.2 wt.-% to about 50 wt.-%, more specifically between about 2 wt.-% to about 40 wt.-%, even more specifically between about 3 wt.-% to about 30 wt.-%, in particular between about 4 wt.-% to about 20 wt.-%, and in particular between about 5 wt.-% to about 20 wt.-% of a combination of ZnO and $ZrO_2$, relative to the total weight of the lead.

In some embodiments, the lead may comprise between about 0.01 wt.-% to about 40 wt.-%, more specifically between about 0.5 wt.-% to about 20 wt.-%, even more specifically between about 0.8 wt.-% to about 15 wt.-%, and in particular between about 1 wt.-% to about 9 wt.-% of ZnO, relative to the total weight of the lead.

In some embodiments, the lead may comprise between about 0.01 wt.-% to about 40 wt.-%, more specifically between about 0.5 wt.-% to about 20 wt.-%, even more specifically between about 0.8 wt.-% to about 10 wt.-%, in particular between about 3 wt.-% to about 10 wt.-%, and in particular between about 3 wt.-% to about 6 wt.-% of $ZrO_2$, relative to the total weight of the lead.

In some embodiments, the lead may comprise the ZnO and/or $ZrO_2$ in the form of particles.

In some embodiments, the $ZrO_2$ particles may have a $D_{50}$ between about 0.1 μm to about 17 μm, more specifically between about 0.2 μm to about 10 μm and even more specifically between about 0.3 μm to about 7 μm, in particular between about 0.4 μm to about 2 μm.

In some embodiments, the $ZrO_2$ particles may have a $D_{90}$ between about 0.5 μm to about 50 μm, more specifically between about 0.5 μm to about 15 μm, in particular 1 μm to about 3 μm.

In some embodiments, the $ZrO_2$ particles may have a BET-value between about 0.5 m²/g to about 22 m²/g, more specifically between about 2.5 m²/g to about 20 m²/g and in particular about 4 m²/g to about 18 m²/g, measured according to DIN ISO 9277:2014-01.

In some embodiments, the ZnO particles may have a BET-value between about 0.5 m$^2$/g to about 22 m$^2$/g, more specifically between about 2.5 m$^2$/g to about 20 m$^2$/g, even more specifically between about 3 m$^2$/g to about 12 m$^2$/g, and in particular about 4 m$^2$/g to about 7 m$^2$/g, measured according to DIN ISO 9277:2014-01.

In some embodiments, the writing instrument may be a handheld writing instrument.

In some embodiments the writing instrument is a dry coloring writing instrument, more specifically chosen from a wax crayon and a colored pencil.

In some embodiments, the lead may have a diameter between about 5 mm to about 35 mm, more specifically between about 6 mm to about 20 mm and in particular 7 mm to about 12 mm.

In some embodiments, the writing instrument may comprise a casing and the lead may be comprised within the casing.

In some embodiments, the lead may have a diameter of between about 2.0 mm to about 4.5 mm, more specifically between about 2.3 mm to about 4.2 mm and in particular between about 2.8 mm to about 4.0 mm.

In some embodiments, the lead may comprise between about 10 wt.-% to about 90 wt.-% of one or more waxes, relative to the total weight of the lead.

In some embodiments, the lead may comprise between about 50 wt.-% to about 95 wt.-%, more specifically between about 60 wt.-% to about 90 wt.-% and in particular between about 70 wt.-% to about 85 wt.-% of the one or more waxes, relative to the total weight of the lead.

In some embodiments, the lead may comprise between about 10 wt.-% to about 45 wt.-%, more specifically between about 15 wt.-% to about 40 wt.-% and in particular between about 20 wt.-% to about 30 wt.-% of the one or more waxes, relative to the total weight of the lead.

In some embodiments, the lead may comprise between about 10 wt.-% to about 45 wt.-%, more specifically between about 15 wt.-% to about 35 wt.-% and in particular between about 18.5 wt.-% to about 27 wt.-% of a polymer, more specifically a thermoplast even more specifically an olefine and in particular polyethylene or polypropylene, relative to the total weight of the lead.

In some embodiments, the lead may comprise between about 1 wt.-% to about 20 wt.-%, more specifically between about 3 wt.-% to about 17 wt.-% and in particular between about 5 wt.-% to about 15 wt.-% of a fatty acid or salt thereof, relative to the total weight of the lead.

In some embodiments, the lead may comprise a fatty acid salt, wherein the fatty acid or salt may comprise a monovalent linear or branched saturated or unsaturated carboxylic acid salt having between about 8 to about 24 carbon atoms, more specifically a monovalent linear saturated carboxylic acid salt having between about 16 to about 20 carbon atoms, and in particular stearic acid, calcium stearate, zinc stearate or mixtures thereof.

In some embodiments, the lead may comprise a filler, in particular a hydrous aluminum phyllosilicate and/or an alkali and/or earth alkali carbonate.

In some embodiments, the lead may comprise between about 10 wt.-% to about 50 wt.-%, more specifically between about 17 wt.-% to about 40 wt.-% and in particular between about 23.5 wt.-% to about 32 wt.-% of the filler, relative to the total weight of the lead.

In some embodiments, the lead may comprise between about 5 wt.-% to about 30 wt.-%, more specifically between about 10 wt.-% to about 25 wt.-% and in particular between about 15 wt.-% to about 20 wt.-% of a hydrous aluminum phyllosilicate, more specifically a layered hydrous aluminum phyllosilicate and in particular kaolinite, relative to the total weight of the lead.

In some embodiments, the lead may comprise between about 5 wt.-% to about 20 wt.-%, more specifically between about 7 wt.-% to about 15 wt.-% and in particular between about 8.5 wt.-% to about 12 wt.-% of an alkali and/or earth alkali carbonate, more specifically an earth alkali carbonate and in particular calcium carbonate, relative to the total weight of the lead.

In some embodiments, the lead may comprise between about 2 wt.-% to about 20 wt.-%, more specifically between about 4 wt.-% to about 15 wt.-% and in particular between about 7 wt.-% to about 11 wt.-% of a processing aid, more specifically a lubricant and in particular tetrastearate pentaerythritol.

In some embodiments, the lead may comprise between about 0.5 wt.-% to about 5 wt.-%, more specifically between about 1 wt.-% to about 3.5 wt.-% and in particular between about 1.5 wt.-% to about 2.5 wt.-% of a plasticizer, more specifically of a phthalic acid ester and in particular of $C_7$-$C_9$ alkyl benzyl phthalate, relative to the total weight of the lead.

In some embodiments, the lead may comprise between about 0.05 wt.-% to about 10 wt.-%, more specifically between about 0.05 wt.-% to about 7 wt.-% and in particular between about 0.1 wt.-% to about 5 wt.-% of one or more pigments, relative to the total weight of the lead.

In some embodiments, the lead may comprise between about 10 wt.-% to about 60 wt.-%, more specifically between about 15 wt.-% to about 55 wt.-% and in particular between about 15 wt.-% to about 50 wt.-% of a hydrous aluminum phyllosilicate, more specifically a layered hydrous aluminum phyllosilicate and in particular kaolinite, relative to the total weight of the lead.

In some embodiments, the lead may comprise between about 5 wt.-% to about 30 wt.-%, more specifically between about 10 wt.-% to about 25 wt.-% and in particular between about 13 wt.-% to about 17 wt.-% of a pigment, relative to the total weight of the lead.

In some embodiments, the lead may comprise between about 10 wt.-% to about 50 wt.-%, more specifically between about 15 wt.-% to about 45 wt.-% and in particular between about 20 wt.-% to about 40 wt.-% of a binder, more specifically a polymeric binder, and in particular styrenic polymers such as polystyrene and/or acrylonitrile butadiene styrene, relative to the total weight of the lead.

## Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

Writing instruments such as pencils or wax crayons comprise or consist of a solid pigment core, also referred to as a lead. The lead may therefore be a dry lead, as opposed to an ink cartridge disposed in a pen. The writing instruments comprising a lead are used to create markings by rubbing the lead against a substrate, such as a piece of paper. To adjust the lightness of a lead and its deposit, $TiO_2$ is typically used as an effective whitening pigment.

However, recently concerns have emerged that $TiO_2$ dust may possible be carcinogenic to humans. During the production of leads comprising $TiO_2$, in particular during the mixing of the structural component with the $TiO_2$, $TiO_2$ dust may be generated, which may be harmful to manufacturing personnel. Further, in some jurisdictions $TiO_2$ in powder form has been banned to be used above certain concentration due to concern about a carcinogenic risk by inhalation. For example, the EU has placed a limit on the use of $TiO_2$ powder at 1 wt.-% or the product must be labelled as comprising possible carcinogens, even if the $TiO_2$ cannot become airborne from the product. As a result, an alternative for $TiO_2$ to adjust the lightness of leads is required.

However, exchanging $TiO_2$ for other white colorants, in particular pigments, is not straightforward since white colorants cannot be used interchangeably. Alternative white colorants may not be equally effective in improving the lightness of the lead and/or the lead's deposit. Further, alternative white colorants may lead to a discoloration, in particular a yellowish tinge, of the lead and/or the lead's deposit. To make matters worse, $TiO_2$ is an almost ideal white colorant since it is effective in providing leads, in which the lead's color is perceived very similar to the formed deposit. This may make it easier for users to choose between different colors and predicting how the markings will look. Alternative white colorants can result in leads, where the perceived color of the lead varies strongly from the lead's deposit.

An alternative pigment which may be used to substitute $TiO_2$ is $ZrO_2$. However, the production of $ZrO_2$ may be energy-intensive and expensive. An indicator of a white pigment providing a high degree of lightness to a lead may be the refractive index. $TiO_2$ for example exhibits a high refractive index at 2.6142. $ZrO_2$ exhibits a refractive index of 2.1588. It was expected that ZnS which exhibits a high refractive index at 2.3552 may also be a suitable white pigment. However, it was found that ZnS by itself and as a mixture with $ZrO_2$ may lead to writing instrument leads with a yellow tinge and may not provide sufficient lightness. Additionally, it was found that ZnS itself or mixtures thereof with $ZrO_2$ may result in leads with an outer shade that significantly differed from deposits formed when rubbed against paper.

Surprisingly, it has been found that a mixture of zirconium dioxide, $ZrO_2$, and zinc oxide, ZnO, which only exhibits a refractive index of 2.0034 may be an effective white pigment to increase the lightness of leads, in particular in comparatively low amounts. Further, $ZrO_2$ and ZnO may not lead to a significant discoloration, e.g. a yellow tinge. Additionally, $ZrO_2$ and ZnO may allow producing leads, wherein the perceived color of the lead does not strongly vary from the color perceived from the lead's deposit on e.g. paper.

Accordingly, in a first aspect, the present disclosure relates to a writing instrument comprising a lead, wherein the lead comprises at least about 0.01 wt.-% $ZrO_2$ and at least about 0.01 wt.-% ZnO, relative to the total weight of the lead. The writing instrument may be a handheld writing instrument.

In some embodiments, the lead may comprise less than about 0.5 wt.-%, more specifically less than about 0.2 wt.-% and in particular substantially no or no $TiO_2$. Hence, the combination of $ZrO_2$ and ZnO may be used to replace $TiO_2$.

In some embodiments, the ratio of $ZrO_2$ to ZnO may be between about 3:1 to about 1:3, more specifically between about 2:1 to about 1:2 and in particular between about 1.2:1 to about 1:1.8. In some embodiments, the ratio of $ZrO_2$ to ZnO may be between about 1:1 to about 1:1.5. It has been surprisingly found that the abovementioned ratios may allow the provision leads of sufficient lightness and a low color-difference $\Delta E_{00}^*$. The color-difference $\Delta E_{00}^*$ is

explained in more detail below.

In some embodiments, the lead may comprise less than about 0.5 wt.-%, more specifically less than about 0.2 wt.-% and in particular substantially no or no black pigment, in particular carbon black. Black pigments, such as carbon black, may counteract the lightening effect of the ZnO and $ZrO_2$.

In some embodiments, the lead may comprise between about 1.2 wt.-% to about 50 wt.-%, more specifically between about 2 wt.-% to about 40 wt.-%, even more specifically between about 3 wt.-% to about 30 wt.-%, in particular between about 4 wt.-% to about 20 wt.-%, and in particular between about 5 wt.-% to about 20 wt.-% of a combination of ZnO and $ZrO_2$, relative to the total weight of the lead. A higher proportion of $ZrO_2$ and ZnO may result in a lighter lead.

In some embodiments, the lead may comprise between about 0.01 wt.-% to about 40 wt.-%, more specifically between about 0.5 wt.-% to about 20 wt.-%, even more specifically between about 0.8 wt.-% to about 15 wt.-%, and in particular between about 1 wt.-% to about 9 wt.-% of ZnO, relative to the total weight of the lead.

In some embodiments, the lead may comprise between about 0.01 wt.-% to about 40 wt.-%, more specifically between about 0.5 wt.-% to about 20 wt.-%, even more specifically between about 0.8 wt.-% to about 10 wt.-%, in particular between about 3 wt.-% to about 10 wt.-%, and in particular between about 3 wt.-% to about 6 wt.-% of $ZrO_2$, relative to the total weight of the lead.

The lightness and the color of the lead in general may be defined as per the CIELAB or CIELCh color space. The CIELAB color space, also referred to as L*a*b*, is a color space defined by the International Commission on Illumination. The color space is designed to approximate human vision. The CIELAB color space defines color in term of three coordinates L*, a* and b*. L* represents the lightness of the color. An L* = 0 yields black and an L* = 100 indicates diffuse white. Specular white may attain L* values above 100. a* defines a color's position between red and green. A negative a* value indicates green and positive values indicate red. b* defines a color's position between blue and yellow. A negative b* value indicates blue and positive values indicate yellow.

The CIELCh color space is based on the CIELAB color space. In the CIELCh color space the lightness L* remains unchanged. However, the a* and b* are converted into the polar coordinates C*, for chroma/relative saturation, and h° for hue angle/angle of the hue in the CIELAB color wheel. The term "chroma" within this disclosure is well-known in the art and attributed its common meaning in this technical field. In some embodiments, the term "chroma" may refer to colorfulness of an area judged as a proportion of the brightness of a similarly illuminated area that appears white or highly transmitting.

The C* may be derived from a* and b* by formula I:

$$C^* = \sqrt{a^2 + b^2}\ \text{(I)}$$

The h° may be derived from a* and b* by formula II:

$$h^\circ = \text{atan}\left(\frac{b^*}{a^*}\right)\ \text{(II)}$$

Further, based on the L*, a* and b* value a color-difference $\Delta E_{00}^*$ can be calculated based on ISO/CIE 11664-6:2014 - Colorimetry Part 6: CIEDE2000 Colour-difference formula. The ISO/CIE 11664-6:2014 - Colorimetry Part 6: CIEDE2000 Colour-difference formula, in particular the Colour-difference formula, are incorporated herein by reference.

A smaller color difference $\Delta E_{00}$ may make it easier for a user to determine the color of the deposit that a lead will produce, by looking at the lead. Wax crayons are commonly supplied without a casing and may not even comprise a wrapping or the wrapping may be removed. As a result, the only way to distinguish wax crayons from one another and/or to determine which color the deposit may create, may be by looking at the surface of the wax crayon.

A protocol for measuring the L*, a* and b* value is provided in the experimental section.

In some embodiments, the lead may comprise the $ZrO_2$ in the form of particles. In some embodiments, the lead may comprise ZnO in the form of particles.

In some embodiments, the $ZrO_2$ particles may have a $D_{50}$ between about 0.1 $\mu$m to about 17 $\mu$m, more specifically between about 0.2 $\mu$m to about 10 $\mu$m and even more specifically between about 0.3 $\mu$m to about 7 $\mu$m, in particular between about 0.4 $\mu$m to about 2 $\mu$m.

In some embodiments, the $ZrO_2$ particles may have a $D_{90}$ between about 0.5 $\mu$m to about 50 $\mu$m, more specifically between about 0.5 $\mu$m to about 15 $\mu$m, in particular 1 $\mu$m to about 3 $\mu$m. $D_{90}$ is a measure for the particle size. Of a given sample, 10% of the particles have a particle size above the $D_{90}$ and 90% have a particle size below $D_{90}$.

In some embodiments, the $ZrO_2$ particles may have a BET-value between about 0.5 $m^2/g$ to about 22 $m^2/g$,

more specifically between about 2.5 m$^2$/g to about 20 m$^2$/g and in particular about 4 m$^2$/g to about 18 m$^2$/g, measured according to DIN ISO 9277:2014-01. Similarly, in some embodiments, the ZnO particles may have a BET-value between about 0.5 m$^2$/g to about 22 m$^2$/g, more specifically between about 2.5 m$^2$/g to about 20 m$^2$/g, even more specifically between about 3 m$^2$/g to about 12 m$^2$/g, and in particular about 4 m$^2$/g to about 7 m$^2$/g, measured according to DIN ISO 9277:2014-01.

The BET-value is a measure for the specific surface area of a material, for example for ZrO$_2$ and ZnO particles.

In some embodiments, the writing instrument may be a wax crayon.

In some embodiments, in particular wherein the writing instrument is a wax crayon, the lead may have a diameter between about 5 mm to about 35 mm, more specifically between about 6 mm to about 20 mm and in particular 7 mm to about 12 mm.

In some embodiments, in particular wherein the writing instrument is a wax crayon, the lead may comprise between about 10 wt.-% to about 90 wt.-% of one or more waxes, relative to the total weight of the lead.

In some embodiments, in particular wherein the writing instrument is a wax crayon, the lead may comprise between about 50 wt.-% to about 95 wt.-%, more specifically between about 60 wt.-% to about 90 wt.-% and in particular between about 70 wt.-% to about 85 wt.-% of one or more waxes, relative to the total weight of the lead.

In some further alternative embodiments, in particular wherein the writing instrument is a wax crayon, the lead may comprise between about 10 wt.-% to about 45 wt.-%, more specifically between about 15 wt.-% to about 40 wt.-% and in particular between about 20 wt.-% to about 30 wt.-% of one or more waxes, relative to the total weight of the lead.

The term "wax," in the present disclosure is intended to be used as is well-established in the field of writing instruments and is, in particular, meant to refer to a lipophilic (fatty) compound that is solid at e.g. room temperature (e.g. about 25 °C) with a reversible solid/liquid change of state. The method of measuring the melting point of the wax is not particularly limited and may be measured using a differential scanning calorimeter (DSC), for example the calorimeter sold under the name DSC 3 by the company Mettler Toledo.

Amongst the aforementioned waxes, the present disclosure relates to waxes having a melting point of at least about 40°C and a solubility water at about 25°C of less than about 1000 mg/L. These properties may help in providing a relatively water-insoluble solid base matrix for the writing instrument, in particular for a wax crayon, for the dispersion of the pigment therein. In some embodiments, the one or more waxes may have a melting point of at least about 35°C, more specifically at least about 50°C and in particular at least about 75°C. In some embodiments, the wax may have a melting point range of between about 35°C and about 200°C, more specifically between about 55°C and about 180°C, and in particular between about 75°C and about 150°C.

In some embodiments, the wax may have a solubility in water at about 25°C of less than about 100 mg/L, more specifically a solubility of less than about 10 mg/L, and in particular a solubility of less than about 1 mg/L. In some embodiments, the wax may be substantially insoluble or insoluble in water at about 25 °C. The method of determining the solubility of the wax is not particularly limited and may be performed by any suitable means, for instance using a USP Dissolution Apparatus 2 (paddle type).

In some embodiments, the one or more waxes may comprise one or more apolar waxes. Examples of such apolar waxes include paraffin waxes, microcrystalline waxes, ozokerine and Fisher-Tropsch waxes. Apolar waxes may be hydrocarbon-based and may be substantially free or free of polar groups.

In some embodiments, in particular wherein the writing instrument is a wax crayon, the lead may comprise between about 10 wt.-% to about 45 wt.-%, more specifically between about 15 wt.-% to about 35 wt.-% and in particular between about 18.5 wt.-% to about 27 wt.-% of a polymer, more specifically a thermoplast even more specifically an olefine and in particular polyethylene or polypropylene, relative to the total weight of the lead. The polymer may increase the leads resistance to breaking. The addition of the polymer may increase the leads modulus of elasticity and/or hardness.

In some embodiments, in particular wherein the writing instrument is a wax crayon, the lead may comprise between about 1 wt.-% to about 20 wt.-%, more specifically between about 3 wt.-% to about 17 wt.-% and in particular between about 5 wt.-% to about 15 wt.-% of a fatty acid or salt thereof, relative to the total weight of the lead.

In some embodiments, in particular wherein the writing instrument is a wax crayon, the fatty acid or salt may comprise a monovalent linear or branched saturated or unsaturated carboxylic acid salt having between about 8 to about 24 carbon atoms, more specifically a monovalent linear saturated carboxylic acid salt having between about 16 to about 20 carbon atoms, and in particular stearic acid, calcium stearate, zinc stearate or mixtures thereof. The fatty acid and/or fatty acid salts may improve the smoothness of writing and/or drawing, in particular by improving the glide. Moreover, the fatty acid and/or fatty acid salt may increase the laydown and thereby the quality of the deposit. Fatty acids may migrate to the surface of the lead, which may lead to the formation of a fatty film, which may be unpleasant to the user. Fatty acid salts may be in some instances advantageous as they have a reduced tendency to migrate to the surface of the lead.

In some embodiments, in particular wherein the writing instrument is a wax crayon, the lead may comprise a filler, in particular a hydrous aluminum phyllosilicate and/or an alkali and/or earth alkali carbonate.

In some embodiments, in particular wherein the writing instrument is a wax crayon, the lead may comprise between about 10 wt.-% to about 50 wt.-%, more specifically between about 17 wt.-% to about 40 wt.-% and in particular between about 23.5 wt.-% to about 32 wt.-% of the filler, relative to the total weight of the lead. Some fillers, in particular kaolinite, may comprise a layered structure. As a result, filler, such as kaolinite, may improve the laydown of a lead by providing surfaces where along shearing action may occur. Additionally, the fillers may decrease the price of the lead.

In some embodiments, in particular wherein the writing instrument is a wax crayon, the lead may comprise between about 5 wt.-% to about 30 wt.-%, more specifically between about 10 wt.-% to about 25 wt.-% and in particular between about 15 wt.-% to about 20 wt.-% of the hydrous aluminum phyllosilicate, more specifically a layered hydrous aluminum phyllosilicate and in particular kaolinite, relative to the total weight of the lead. In some embodiments, the hydrous aluminum phyllosilicate may be at least partly or fully substituted in mica and/or talc.

In some embodiments, in particular wherein the writing instrument is a wax crayon, the lead may comprise between about 5 wt.-% to about 20 wt.-%, more specifically between about 7 wt.-% to about 15 wt.-% and in particular between about 8.5 wt.-% to about 12 wt.-% of the alkali and/or earth alkali carbonate, more specifically an earth alkali carbonate and in particular calcium carbonate, relative to the total weight of the lead.

In some embodiments, in particular wherein the writing instrument is a wax crayon, the lead may comprise between about 0.5 wt.-% to about 5 wt.-%, more specifically between about 1 wt.-% to about 3.5 wt.-% and in particular between about 1.5 wt.-% to about 2.5 wt.-% of a plasticizer, more specifically of a phthalic acid ester and in particular of $C_7$-$C_9$ alkyl benzyl phthalate, relative to the total weight of the lead. The plasticizer may soften the lead and thereby increase the laydown of the lead, which in turn may improve the visibility and/or intensity of the deposit.

In some embodiments, in particular wherein the writing instrument is a wax crayon, the lead may comprise between about 2 wt.-% to about 20 wt.-%, more specifically between about 4 wt.-% to about 15 wt.-% and in particular between about 7 wt.-% to about 11 wt.-% of a processing aid, more specifically a lubricant and in particular tetrastearate pentaerythritol. The processing aid may improve manufacturing efficiency of the lead

In some embodiments, in particular wherein the writing instrument is a wax crayon, the lead may comprise between about 0.05 wt.-% to about 10 wt.-%, more specifically between about 0.05 wt.-% to about 7 wt.-% and in particular between about 0.1 wt.-% to about 5 wt.-% of one or more colorants, relative to the total weight of the lead.

In some embodiments, in particular wherein the writing instrument is a wax crayon, the lead may comprise between about 0.05 wt.-% to about 10 wt.-%, more specifically between about 0.05 wt.-% to about 7 wt.-% and in particular between about 0.1 wt.-% to about 5 wt.-% of one or more pigments, relative to the total weight of the lead. The one or more colorants and/or pigments may adjust the color of the lead. For example, the addition of a blue pigment may lead to a blue lead. The term "pigment" and "colorant" used within this disclosure are well known in the art. Within this disclosure the proportions attributed to "pigments" and "colorants" shall not apply to $ZrO_2$ or $TiO_2$.

In some embodiments, in particular wherein the writing instrument is a pencil, the writing instrument may comprise a casing and the lead may be comprised within the casing.

In some embodiments, in particular wherein the writing instrument is a pencil, the lead may have a diameter of between about 2.0 mm to about 4.5 mm, more specifically between about 2.3 mm to about 4.2 mm and in particular between about 2.8 mm to about 4.0 mm.

In some embodiments, in particular wherein the writing instrument is a pencil, the lead may comprise between about 5 wt.-% to about 60 wt.-%, more specifically between about 10 wt.-% to about 55 wt.-% and in particular between about 15 wt.-% to about 50 wt.-% of a hydrous aluminum phyllosilicate, more specifically a layered hydrous aluminum phyllosilicate and in particular kaolinite, relative to the total weight of the lead. In some embodiments, the hydrous aluminum phyllosilicate may be at least partly or fully substituted in mica and/or talc.

In some embodiments, in particular wherein the writing instrument is a pencil, the lead may comprise between about 1 wt.-% to about 20 wt.-%, more specifically between about 3 wt.-% to about 17 wt.-% and in particular between about 5 wt.-% to about 15 wt.-% of a fatty acid or salt thereof, relative to the total weight of the lead.

In some embodiments, in particular wherein the writing instrument is a pencil, the fatty acid or salt may comprise a monovalent linear or branched saturated or unsaturated carboxylic acid salt having between about 8 to about 24 carbon atoms, more specifically a monovalent linear saturated carboxylic acid salt having between about 16 to about 20 carbon atoms, and in particular stearic acid, calcium stearate, zinc stearate or mixtures thereof.

In some embodiments, in particular wherein the writing instrument is a pencil, the lead may comprise between about 5 wt.-% to about 30 wt.-%, more specifically between about 10 wt.-% to about 25 wt.-% and in particular between about 13 wt.-% to about 17 wt.-% of one or more colorants, relative to the total weight of the lead.

In some embodiments, in particular wherein the writing instrument is a pencil, the lead may comprise between about 5 wt.-% to about 30 wt.-%, more specifically between about 10 wt.-% to about 25 wt.-% and in particular between about 13 wt.-% to about 17 wt.-% of one or more pigments, relative to the total weight of the lead.

In some embodiments, in particular wherein the writing instrument is a pencil, the lead may comprise between about 10 wt.-% to about 50 wt.-%, more specifically between about 15 wt.-% to about 45 wt.-% and in particular between about 20 wt.-% to about 40 wt.-% of a binder, more specifically a polymeric binder, and in particular styrenic polymers such as polystyrene and/or acrylonitrile butadiene styrene, relative to the total weight of the lead.

In some embodiments, in particular wherein the writing instrument is a pencil, the lead may comprise between about 0.5 wt.-% to about 10 wt.-%, more specifically between about 2 wt.-% to about 8 wt.-% and in particular between about 3.5 wt.-% to about 6.5 wt.-% of a plasticizer, more specifically of a benzoate ester.

**Experimental Section**

Experiments to determine the influence of different $ZrO_2$/ZnO compositions on the colorimetric values were performed. The results were also compared to a $TiO_2$ composition. Wax crayon compositions were used for the tests. The compositions are provided in Table 1.

Manufacturing of Test Specimen:

The following steps were performed to manufacture the test specimen with a composition according to Table 1:

1) Mix all components.
2) Set a thermostatic bath (For example, AMETEK Brookfield TC-202) to a temperature of 150 °C and add a mixing vessel into the thermostatic bath.
3) Add the mixture to the mixing vessel in the thermostatic bath.
4) Stir the mixture of neutral base and colorant at 2000 rpm with a butterfly tool attached to the DISPERMAT CV3 Plus by VMA-Getzmann GmbH for 2 hours.
5) Remove butterfly tool and fill molten mixture into a cubic mold of the dimensions: 25 mm x 100 mm x 10 mm.
6) Let mixture cool and subsequently remove the finished specimen from the mold.

Table 1 shows the compositions of test specimens and Table 2 shows comparative compositions of test specimens.

Table 1 - Example Compositions of Test Specimen for Tests

| Component | Examp. A [wt.-%] | Examp. B [wt.-%] | Examp. C [wt.-%] | Examp. D [wt.-%] | Examp. E [wt.-%] |
|---|---|---|---|---|---|
| Wax | 27.10 | 27.10 | 27.10 | 27.10 | 27.10 |
| Polyolefine | 23.50 | 23.50 | 23.51 | 23.51 | 23.50 |
| Fatty Acid Salt | 7.2 | 7.2 | 7.2 | 7.2 | 7.2 |
| Plasticizer | 2.00 | 2.00 | 2.00 | 2.00 | 2.00 |
| Pigment (PV23) | 0.15 | 0.15 | 0.15 | 0.15 | 0.15 |
| Pigment (PR 57: 1) | 0.02 | 0.02 | 0.02 | 0.02 | 0.02 |
| $ZrO_2$ | 9 | 7.2 | 6 | 4.8 | 3 |
| ZnO | 3 | 4.8 | 6 | 7.2 | 9 |
| Fillers | QSP 100% | QSP 100% | QSP 100% | QSP 100% | QSP 100% |

Table 2 - Comparative Compositions of Test Specimen for Tests

| Component | Comp. A [wt.-%] | Comp. B [wt.-%] | Comp. C [wt.-%] | Comp. D [wt.-%] | Comp. E [wt.-%] | Comp. F [wt.-%] | Comp. G [wt.-%] |
|---|---|---|---|---|---|---|---|
| Wax | 27.10 | 27.10 | 27.10 | 27.10 | 27.10 | 27.10 | 27.10 |
| Polyolefine | 23.50 | 23.51 | 23.50 | 23.50 | 23.51 | 23.50 | 23.50 |
| Fatty Acid Salt | 7.2 | 7.2 | 7.2 | 7.2 | 7.2 | 7.2 | 7.2 |
| Plasticizer | 2.00 | 2.00 | 2.00 | 2.00 | 2.00 | 2.00 | 2.00 |
| Pigment (PV23) | 0.15 | 0.15 | 0.15 | 0.15 | 0.15 | 0.15 | 0.15 |

(continued)

| Component | Comp. A [wt.-%] | Comp. B [wt.-%] | Comp. C [wt.-%] | Comp. D [wt.-%] | Comp. E [wt.-%] | Comp. F [wt.-%] | Comp. G [wt.-%] |
|---|---|---|---|---|---|---|---|
| Pigment (PR 57:1) | 0.02 | 0.02 | 0.02 | 0.02 | 0.02 | 0.02 | 0.02 |
| $ZrO_2$ | 11.99 | | 9 | 7.2 | 6 | 4.8 | 3 |
| ZnS | | | 3 | 4.8 | 6 | 7.2 | 9 |
| $TiO_2$ | | 11.99 | | | | | |
| Fillers | QSP 100% | QSP 100% | QSP 100% | QSP 100% | QSP 100% | QSP 100% | QSP 100% |

Colorimetry of deposits - Test Setup:

All colorimetric measurements on deposits have been performed on deposits created on a white paper AURORA ISO-12757.

To create the deposit a Writing apparatus HST 10 by the company HUTT Maschinenbau from Germany was used under the conditions described in Table 3. Further, to measure the colorimetric data in the CIE L*a*b* color space, e.g. L*, a* and b*a KONICA MINOLTA CM-3610 A spectrophotometer was used. The following setting were applied for the KONICA MINOLTA CM-3610 A spectrophotometer:

illuminant: D65,
angle: 10°,
specular components: included.

Table 3 - Parameters for producing the deposits for colorimetry.

| | Parameters for producing the deposits |
|---|---|
| Article type | Composition According to Tables 1 & 2 |
| Paper feed (mm/min) | 20 |
| Writing speed | 4.5 m/min |
| Writing angle | 70° |
| Total weight support / additional weight (g) | 340 +/- 5 |
| Writing length for axial rotation of the article (m) | 7 |
| Writing length (m) in a spiral pattern | 25 |

The test for the deposit's colorimetric measurement was carried out by the following protocol:

1. Place the writing article in the appropriate supports;
2. Produce a deposit according to the parameters specified in Table 3;
3. Measure the colorimetric data of the deposit with the KONICA MINOLTA CM-3610 A spectrophotometer with an opening of measurement at 25.4mm.

Colorimetry of crayon surface - Test Setup:

All colorimetric measurements done on a surface of a crayon were performed using a KONICA MINOLTA CM-3610 A spectrophotometer with an opening of measurement at 4mm. For colorimetric measurements of the surface of a crayon, the crayon's surface is placed in direct contact with the lens of the spectrophotometer.

Results of the Tests

Table 4 Results of Colorimetry Tests Exemplary Compositions

| Composition | Evaluated Surface | Colorimetric data | | | | | |
|---|---|---|---|---|---|---|---|
| | | L* | a* | b* | C* | h* | $\Delta E_{00}^{*}$ |
| Example A | Surface of crayons | 50.99 | 15.28 | -28.73 | 32.54 | 298.01 | |
| | Deposit after scriptmeter | 89.27 | 7.03 | -14.67 | 16.27 | 295.60 | |
| | Evaluation Delta | 38.28 | -8.25 | 14.06 | -16.27 | -2.41 | 30.56 |
| Example B | Surface of crayons | 49.07 | 15.74 | -30.26 | 34.11 | 297.49 | |
| | Deposit after scriptmeter | 87.77 | 8.01 | -15.84 | 17.75 | 296.83 | |
| | Evaluation Delta | 38.70 | -7.73 | 14.42 | -16.36 | -0.66 | 31.44 |
| Example C | Surface of crayons | 50.95 | 15.56 | -28.86 | 32.79 | 298.34 | |
| | Deposit after scriptmeter | 87.92 | 7.89 | -15.30 | 17.21 | 297.26 | |
| | Evaluation Delta | 36.97 | -7.67 | 13.56 | -15.58 | -1.08 | 29.72 |
| Example D | Surface of crayons | 50.87 | 15.12 | -28.50 | 32.27 | 297.95 | |
| | Deposit after scriptmeter | 87.16 | 8.45 | -16.25 | 18.31 | 297.46 | |
| | Evaluation Delta | 36.29 | -6.67 | 12.25 | -13.96 | -0.49 | 29.16 |
| Example E | Surface of crayons | 48.73 | 15.43 | -29.72 | 33.49 | 297.44 | |
| | Deposit after scriptmeter | 88.20 | 7.48 | -14.64 | 16.44 | 297.07 | |
| | Evaluation Delta | 39.47 | -7.95 | 15.08 | -17.05 | -0.37 | 32.14 |

Table 5 Results of Colorimetry Tests Comparative Compositions

| Composition | Evaluated Surface | Colorimetric data | | | | | |
|---|---|---|---|---|---|---|---|
| | | L* | a* | b* | C* | h* | $\Delta E_{00}^{*}$ |
| Comparative Example A | Surface of crayons | 52.56 | 15.92 | -30.18 | 34.12 | 297.81 | |
| | Deposit after scriptmeter | 90.16 | 6.94 | -16.06 | 17.50 | 293.36 | |
| | Evaluation Delta | 37.60 | -8.98 | 14.12 | -16.62 | -4,.5 | 29.58 |
| Comparative Example B | Surface of crayons | 61.66 | 12.79 | -28.87 | 31.58 | 293.89 | |
| | Deposit after scriptmeter | 88.41 | 7.80 | -16.65 | 18.39 | 295.11 | |
| | Evaluation Delta | 26.75 | -4.99 | 12.22 | -13.19 | 1.22 | 20.57 |
| Comparative Example C | Surface of crayons | 49.45 | 14.82 | -28.23 | 31.88 | 297.70 | |
| | Deposit after scriptmeter | 88.36 | 7.68 | -16.02 | 17.76 | 295.62 | |
| | Evaluation Delta | 38.91 | -7.14 | 12.21 | -14.12 | -2.08 | 31.21 |
| Comparative Example D | Surface of crayons | 47.54 | 14.82 | -28.40 | 32.04 | 297.56 | |
| | Deposit after scriptmeter | 88.88 | 7.00 | -15.69 | 17.18 | 294.04 | |
| | Evaluation Delta | 41.34 | -7.82 | 12.71 | -14.86 | -3.52 | 33.40 |
| Comparative Example E | Surface of crayons | 45.59 | 14.82 | -28.51 | 32.13 | 297.47 | |
| | Deposit after scriptmeter | 88.90 | 7.03 | -15.44 | 16.97 | 294.50 | |
| | Evaluation Delta | 43.31 | -7.79 | 13.07 | -15.16 | -2.97 | 35.36 |
| Comparative Example F | Surface of crayons | 45.97 | 14.78 | -27.39 | 31.12 | 298.35 | |

(continued)

| Composition | Evaluated Surface | Colorimetric data | | | | | |
|---|---|---|---|---|---|---|---|
| | | L* | a* | b* | C* | h* | $\Delta E_{00}^{*}$ |
| | Deposit after scriptmeter | 88.42 | 7.16 | -16.10 | 17.62 | 293.97 | |
| | Evaluation Delta | 42.45 | -7.62 | 11.29 | -13.50 | -4.38 | 34.57 |
| **Comparative Example G** | Surface of crayons | 42.41 | 13.86 | -27.48 | 30.78 | 296.77 | |
| | Deposit after scriptmeter | 87.89 | 7.60 | -16.71 | 18.36 | 294.44 | |
| | Evaluation Delta | 45.48 | -6.26 | 10.77 | -12.42 | -2.33 | 37.80 |

The test results shown in Table 4 and Table 5 show that the mixture of $ZrO_2$ and ZnO may act as an effective white pigment to increase the lightness of leads, especially in comparison to mixtures comprising ZnS instead of ZnO in the same weight amount. Additionally, $ZrO_2$ and ZnO may allow producing leads, wherein the perceived color of the lead does not strongly vary from the color perceived from the lead's deposit on e.g. paper, especially compared to compositions comprising ZnS instead of ZnO in the same weight amount. Further, the test results show, that an optimum for the $\Delta E_{00}^{*}$ value may be reached at a ratio of $ZrO_2$ to ZnO between 3:1 to about 1:1.5, in particular 1:1 to about 1:1.5.

The present disclosure furthermore relates to the following aspects.

**Aspects**

1. A writing instrument comprising a lead, wherein the lead comprises:

at least about 0.01 wt.-% $ZrO_2$, and
at least about 0.01 wt.-% ZnO, relative to the total weight of the lead.

2. The writing instrument according to aspect 1, wherein the ratio of $ZrO_2$ to ZnO is between about 3:1 to about 1:3, more specifically between about 2:1 to about 1:2 and in particular between about 1.2:1 to about 1:1.8.

3. The writing instrument according to any preceding aspect, wherein the lead comprises less than about 0.5 wt.-%, more specifically less than about 0.2 wt.-% and in particular substantially no or no TiO2.

4. The writing instrument according to any preceding aspect, wherein the lead comprises less than about 0.5 wt.-%, more specifically less than about 0.2 wt.-% and in particular substantially no or no black pigment, in particular carbon black.

5. The writing instrument according to any preceding aspect, wherein the lead comprises between about 1.2 wt.-% to about 50 wt.-%, more specifically between about 2 wt.-% to about 40 wt.-%, even more specifically between about 3 wt.-% to about 30 wt.-%, in particular between about 4 wt.-% to about 20 wt.-%, and in particular between about 5 wt.-% to about 20 wt.-% of a combination of ZnO and $ZrO_2$, relative to the total weight of the lead.

6. The writing instrument according to any preceding aspect, wherein the lead comprises between about 0.01 wt.-% to about 40 wt.-%, more specifically between about 0.5 wt.-% to about 20 wt.-%, even more specifically between about 0.8 wt.-% to about 15 wt.-%, and in particular between about 1 wt.-% to about 9 wt.-% of ZnO, relative to the total weight of the lead.

7. The writing instrument according to any preceding aspect, wherein the lead comprises between about 0.01 wt.-% to about 40 wt.-%, more specifically between about 0.5 wt.-% to about 20 wt.-%, even more specifically between about 0.8 wt.-% to about 10 wt.-%, in particular between about 3 wt.-% to about 10 wt.-%, and in particular between about 3 wt.-% to about 6 wt.-% of $ZrO_2$ , relative to the total weight of the lead.

8. The writing instrument according to any preceding aspect, wherein the lead comprises the ZnO and/or $ZrO_2$ in

the form of particles.

9. The writing instrument according to aspect 8, wherein the $ZrO_2$ particles have a $D_{50}$ between about 0.1 $\mu$m to about 17 $\mu$m, more specifically between about 0.2 $\mu$m to about 10 $\mu$m and even more specifically between about 0.3 $\mu$m to about 7 $\mu$m, in particular between about 0.4 $\mu$m to about 2 $\mu$m.

10. The writing instrument according to aspect 8 or 9, wherein the $ZrO_2$ particles have a $D_{90}$ between about 0.5 $\mu$m to about 50 $\mu$m, more specifically between about 0.5 $\mu$m to about 15 $\mu$m, in particular 1 $\mu$m to about 3 $\mu$m.

11. The writing instrument according to any one of aspects 8 to 10, the wherein $ZrO_2$ particles have a BET-value between about 0.5 $m^2$/g to about 22 $m^2$/g, more specifically between about 2.5 $m^2$/g to about 20 $m^2$/g and in particular about 4 $m^2$/g to about 18 $m^2$/g, measured according to DIN ISO 9277:2014-01.

12. The writing instrument according to any one of aspects 8 to 11, the wherein ZnO particles have a BET-value between about 0.5 $m^2$/g to about 22 $m^2$/g, more specifically between about 2.5 $m^2$/g to about 20 $m^2$/g, even more specifically between about 3 $m^2$/g to about 12 $m^2$/g, and in particular about 4 $m^2$/g to about 7 $m^2$/g, measured according to DIN ISO 9277:2014-01.

13. The writing instrument according to any preceding aspect, wherein the writing instrument is a handheld writing instrument.

14. The writing instrument according to any preceding aspect, wherein the lead has a diameter between about 5 mm to about 35 mm, more specifically between about 6 mm to about 20 mm and in particular 7 mm to about 12 mm.

15. The writing instrument according to any preceding aspect, wherein the writing instrument comprises a casing and the lead is comprised within the casing.

16. The writing instrument according to any one of aspects 1 to 14, wherein the lead has a diameter of between about 2.0 mm to about 4.5 mm, more specifically between about 2.3 mm to about 4.2 mm and in particular between about 2.8 mm to about 4.0 mm.

17. The writing instrument according to any preceding aspect, wherein the lead comprises between about 10 wt.-% to about 90 wt.-% of one or more waxes, relative to the total weight of the lead.

18. The writing instrument according to any preceding aspect, wherein the lead comprises between about 50 wt.-% to about 95 wt.-%, more specifically between about 60 wt.-% to about 90 wt.-% and in particular between about 70 wt.-% to about 85 wt.-% of the one or more waxes, relative to the total weight of the lead.

19. The writing instrument according to any preceding aspect, wherein the lead comprises between about 10 wt.-% to about 45 wt.-%, more specifically between about 15 wt.-% to about 40 wt.-% and in particular between about 20 wt.-% to about 30 wt.-% of the one or more waxes, relative to the total weight of the lead.

20. The writing instrument according to any preceding aspect, wherein the lead comprises between about 10 wt.-% to about 45 wt.-%, more specifically between about 15 wt.-% to about 35 wt.-% and in particular between about 18.5 wt.-% to about 27 wt.-% of a polymer, more specifically a thermoplast even more specifically an olefine and in particular polyethylene or polypropylene, relative to the total weight of the lead.

21. The writing instrument according to any preceding aspect, wherein the lead comprises between about 1 wt.-% to about 20 wt.-%, more specifically between about 3 wt.-% to about 17 wt.-% and in particular between about 5 wt.-% to about 15 wt.-% of a fatty acid or salt thereof, relative to the total weight of the lead.

22. The writing instrument according to any preceding aspect, wherein the lead comprises a fatty acid salt, wherein the fatty acid or salt comprises a monovalent linear or branched saturated or unsaturated carboxylic acid salt having between about 8 to about 24 carbon atoms, more specifically a monovalent linear saturated carboxylic acid salt having between about 16 to about 20 carbon atoms, and in particular stearic acid, calcium stearate, zinc stearate or mixtures thereof.

23. The writing instrument according to any preceding aspect, wherein the lead comprises a filler, in particular a hydrous aluminum phyllosilicate and/or an alkali and/or earth alkali carbonate.

24. The writing instrument according to aspect 23, wherein the lead comprises between about 10 wt.-% to about 50 wt.-%, more specifically between about 17 wt.-% to about 40 wt.-% and in particular between about 23.5 wt.-% to about 32 wt.-% of the filler, relative to the total weight of the lead.

25. The writing instrument according to aspect 23 or 24, wherein the lead comprises between about 5 wt.-% to about 30 wt.-%, more specifically between about 10 wt.-% to about 25 wt.-% and in particular between about 15 wt.-% to about 20 wt.-% of a hydrous aluminum phyllosilicate, more specifically a layered hydrous aluminum phyllosilicate and in particular kaolinite, relative to the total weight of the lead.

26. The writing instrument according to any one of aspect 23 to 25, wherein the lead comprises between about 5 wt.-% to about 20 wt.-%, more specifically between about 7 wt.-% to about 15 wt.-% and in particular between about 8.5 wt.-% to about 12 wt.-% of an alkali and/or earth alkali carbonate, more specifically an earth alkali carbonate and in particular calcium carbonate, relative to the total weight of the lead.

27. The writing instrument according to any preceding aspect, wherein the lead comprises between about 2 wt.-% to about 20 wt.-%, more specifically between about 4 wt.-% to about 15 wt.-% and in particular between about 7 wt.-% to about 11 wt.-% of a processing aid, more specifically a lubricant and in particular tetrastearate pentaerythritol.

28. The writing instrument according to any preceding aspect, wherein the lead comprises between about 0.5 wt.-% to about 5 wt.-%, more specifically between about 1 wt.-% to about 3.5 wt.-% and in particular between about 1.5 wt.-% to about 2.5 wt.-% of a plasticizer, more specifically of a phthalic acid ester and in particular of $C_7$-$C_9$ alkyl benzyl phthalate, relative to the total weight of the lead.

29. The writing instrument according to any preceding aspect, wherein the lead comprises between about 0.05 wt.-% to about 10 wt.-%, more specifically between about 0.05 wt.-% to about 7 wt.-% and in particular between about 0.1 wt.-% to about 5 wt.-% of one or more pigments, relative to the total weight of the lead.

30. The writing instrument according to any one of aspects 23 or 26 to 29 when dependent on aspect 22, wherein the lead comprises between about 10 wt.-% to about 60 wt.-%, more specifically between about 15 wt.-% to about 55 wt.-% and in particular between about 15 wt.-% to about 50 wt.-% of a hydrous aluminum phyllosilicate, more specifically a layered hydrous aluminum phyllosilicate and in particular kaolinite, relative to the total weight of the lead.

31. The writing instrument according to any one of aspect 1 to 26 or 28, wherein the lead comprises between about 5 wt.-% to about 30 wt.-%, more specifically between about 10 wt.-% to about 25 wt.-% and in particular between about 13 wt.-% to about 17 wt.-% of a pigment, relative to the total weight of the lead.

32. The writing instrument according to any preceding aspect, wherein the lead comprises between about 10 wt.-% to about 50 wt.-%, more specifically between about 15 wt.-% to about 45 wt.-% and in particular between about 20 wt.-% to about 40 wt.-% of a binder, more specifically a polymeric binder, and in particular styrenic polymers such as polystyrene and/or acrylonitrile butadiene styrene, relative to the total weight of the lead.

## Claims

1.  A writing instrument comprising a lead, wherein the lead comprises:

    at least about 0.01 wt.-% $ZrO_2$, and
    at least about 0.01 wt.-% ZnO, relative to the total weight of the lead.

2.  The writing instrument according to claim 1, wherein the ratio of $ZrO_2$ to ZnO is between about 3:1 to about 1:3, more specifically between about 2:1 to about 1:2 and in particular between about 1.2:1 to about 1:1.8.

3.  The writing instrument according to any preceding claim, wherein the lead comprises less than about 0.5 wt.-%, more specifically less than about 0.2 wt.-% and in particular substantially no or no TiO2.

4.  The writing instrument according to any preceding claim, wherein the lead comprises less than about 0.5 wt.-%,

more specifically less than about 0.2 wt.-% and in particular substantially no or no black pigment, in particular carbon black.

5. The writing instrument according to any preceding claim, wherein the lead comprises between about 1.2 wt.-% to about 50 wt.-%, more specifically between about 2 wt.-% to about 40 wt.-%, even more specifically between about 3 wt.-% to about 30 wt.-%, in particular between about 4 wt.-% to about 20 wt.-%, and in particular between about 5 wt.-% to about 20 wt.-% of a combination of ZnO and $ZrO_2$, relative to the total weight of the lead.

6. The writing instrument according to any preceding claim, wherein the lead comprises between about 0.01 wt.-% to about 40 wt.-%, more specifically between about 0.5 wt.-% to about 20 wt.-%, even more specifically between about 0.8 wt.-% to about 15 wt.-%, and in particular between about 1 wt.-% to about 9 wt.-% of ZnO, relative to the total weight of the lead.

7. The writing instrument according to any preceding claim, wherein the lead comprises between about 0.01 wt.-% to about 40 wt.-%, more specifically between about 0.5 wt.-% to about 20 wt.-%, even more specifically between about 0.8 wt.-% to about 10 wt.-%, in particular between about 3 wt.-% to about 10 wt.-%, and in particular between about 3 wt.-% to about 6 wt.-% of $ZrO_2$, relative to the total weight of the lead.

8. The writing instrument according to any preceding claim, wherein the lead comprises the ZnO and/or $ZrO_2$ in the form of particles.

9. The writing instrument according to claim 8, wherein the $ZrO_2$ particles have a $D_{50}$ between about 0.1 $\mu$m to about 17 $\mu$m, more specifically between about 0.2 $\mu$m to about 10 $\mu$m and even more specifically between about 0.3 $\mu$m to about 7 $\mu$m, in particular between about 0.4 $\mu$m to about 2 $\mu$m.

10. The writing instrument according to any preceding claim, wherein the lead has a diameter between about 5 mm to about 35 mm, more specifically between about 6 mm to about 20 mm and in particular 7 mm to about 12 mm; or wherein the lead has a diameter of between about 2.0 mm to about 4.5 mm, more specifically between about 2.3 mm to about 4.2 mm and in particular between about 2.8 mm to about 4.0 mm.

11. The writing instrument according to any preceding claim, wherein the lead comprises between about 10 wt.-% to about 95 wt.-% of one or more waxes, more specifically between about 50 wt.-% to about 95 wt.-%, even more specifically between about 60 wt.-% to about 90 wt.-% and in particular between about 70 wt.-% to about 85 wt.-% of the one or more waxes, relative to the total weight of the lead.

12. The writing instrument according to any preceding claim, wherein the lead comprises between about 10 wt.-% to about 45 wt.-%, more specifically between about 15 wt.-% to about 35 wt.-% and in particular between about 18.5 wt.-% to about 27 wt.-% of a polymer, more specifically a thermoplast even more specifically an olefine and in particular polyethylene or polypropylene, relative to the total weight of the lead.

13. The writing instrument according to any preceding claim, wherein the lead comprises between about 1 wt.-% to about 20 wt.-%, more specifically between about 3 wt.-% to about 17 wt.-% and in particular between about 5 wt.-% to about 15 wt.-% of a fatty acid or salt thereof, relative to the total weight of the lead.

14. The writing instrument according to any preceding claim, wherein the lead comprises between about 0.05 wt.-% to about 10 wt.-%, more specifically between about 0.05 wt.-% to about 7 wt.-% and in particular between about 0.1 wt.-% to about 5 wt.-% of one or more pigments, or; wherein the lead comprises between about 5 wt.-% to about 30 wt.-%, more specifically between about 10 wt.-% to about 25 wt.-% and in particular between about 13 wt.-% to about 17 wt.-% of a pigment, relative to the total weight of the lead.

15. The writing instrument according to any preceding claim, wherein the lead comprises between about 10 wt.-% to about 50 wt.-%, more specifically between about 15 wt.-% to about 45 wt.-% and in particular between about 20 wt.-% to about 40 wt.-% of a binder, more specifically a polymeric binder, and in particular styrenic polymers such as polystyrene and/or acrylonitrile butadiene styrene, relative to the total weight of the lead.

Europäisches
Patentamt

European
Patent Office

Office européen
des brevets

# EUROPEAN SEARCH REPORT

Application Number

EP 22 30 6540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 108 129 914 B (UNIV SHAANXI SCIENCE & TECH) 16 March 2021 (2021-03-16) | 1-10,12, 14,15 | INV. B43K19/02 |
| Y | * paragraph [0023] – paragraph [0117]; examples 6,8 * | 11,13 | ADD. C09D13/00 |
| X | CN 111 471 355 A (HARBIN LONGZHIDAO TECH CO LTD) 31 July 2020 (2020-07-31) * paragraph [0011] – paragraph [0062] * | 1,4-7, 10,14,15 | |
| Y | EP 2 845 747 A1 (PILOT CORP [JP]) 11 March 2015 (2015-03-11) | 11,13 | |
| A | * paragraph [0020] – paragraph [0119] * | 1-10,12, 14,15 | |

TECHNICAL FIELDS
SEARCHED (IPC)

B43K
C09G
C09D

The present search report has been drawn up for all claims

| Place of search | Date of completion of the search | Examiner |
|---|---|---|
| Munich | 29 March 2023 | Patosuo, Susanna |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
.................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 22 30 6540

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2023

| Patent document cited in search report | | Publication date | Patent family member(s) | | Publication date |
|---|---|---|---|---|---|
| CN 108129914 | B | 16-03-2021 | NONE | | |
| CN 111471355 | A | 31-07-2020 | NONE | | |
| EP 2845747 | A1 | 11-03-2015 | CN | 104417151 A | 18-03-2015 |
| | | | EP | 2845747 A1 | 11-03-2015 |

EPO FORM P0459

For more details about this annex : see Official Journal of the European Patent Office, No. 12/82